# FASCICULE DE BREVET EUROPEEN

(11) **EP 1 335 851 B1**
(45) Date de publication et mention de la délivrance du brevet: **17.11.2004**
(21) Numéro de dépôt: 01974394.7
(22) Date de dépôt: 21.09.2001
(51) Int. Cl.: B62D 43/04

(54) **AGENCEMENT D'UN ENSEMBLE DE TREUIL DE ROUE DE SECOURS SOUS UN PLANCHER DE VEHICULE ET PROCEDE D'INSTALLATION D'UN TEL AGENCEMENT**
ANORDNUNG EINER RESERVERADWINDENEINHEIT UNTER EINEM FAHRZEUGBODEN UND EINBAUVERFAHREN FÜR DIESE ANORDNUNG
SPARE TYRE LIFT MECHANISM FITTING BENEATH A VEHICLE FLOOR AND METHOD FOR FIXING SAME

(30) Priorité: 22.09.2000 FR 0012096
(43) Date de publication de la demande: 20.08.2003
(73) Titulaire: Renault, 92100 Boulogne Billancourt (FR)
(72) Inventeur: VINCENT, Philippe, F-92500 Rueil Malmaison (FR)
(86) Numéro de dépôt international: PCT/FR2001/002944
(87) Numéro de publication internationale: WO 2002/024513

(56) Documents cités:
- US-A- 4 548 540
- US-A- 4 915 358
- US-A- 5 251 876
- US-A- 6 026 999

## Description

La présente invention se rapporte à un agencement d'un ensemble de treuil de roue de secours sous un plancher de véhicule automobile, à un procédé d'installation d'un tel agencement, et à un véhicule automobile comprenant un tel agencement.

On connaît du brevet US 4548540 un agencement du type susmentionné.

La présente invention a pour but de fournir un agencement dans lequel on peut réaliser l'opération d'enroulement du câble de treuil en dehors de la chaîne de montage de manière à réduire le temps de cycle.

On atteint ce but de l'invention avec un agencement d'un ensemble de treuil de roue de secours sous un plancher de véhicule automobile, conforme à la revendication 1.

Grâce à ces caractéristiques, on peut fixer l'ensemble de treuil sous le plancher à partir de l'espace situé au-dessus de ce plancher, de sorte que la position -de la roue de secours par rapport à cet ensemble de treuil est sans incidence sur l'installation de l'agencement selon l'invention.

On peut ainsi en particulier enrouler le câble du treuil de manière à plaquer la roue de secours contre l'ensemble de treuil préalablement à sa fixation sous le plancher du véhicule, en dehors de la chaîne de montage, et réduire ainsi de manière significative le temps de cycle de cette chaîne.

Suivant d'autres caractéristiques de l'agencement selon l'invention :
- ledit ensemble de treuil est adapté pour se loger sensiblement à l'intérieur de ladite roue de secours,
- ledit ensemble de treuil définit un volume sensiblement cylindrique dont la hauteur est voisine de celle de ladite roue de secours,
- ledit ensemble de. treuil définit une cavité communiquant avec l'espace situé au-dessus dudit plancher par une ouverture formée dans ce plancher, et un panier à outils est logé dans ladite cavité,
- ledit panier à outils définit un volume sensiblement cylindrique,
- ledit panier à outils comprend un dispositif d'éclairage,
- ledit plancher comprend des renforts,
- lesdits renforts sont disposés radialement à la périphérie de ladite ouverture.

On atteint également le but de l'invention avec un procédé d'installation d'un agencement conforme ce qui précède sur un véhicule automobile se déplaçant sur une chaîne de montage, remarquable en ce que :
- en dehors de ladite chaîne de montage, a) on relie ledit ensemble de treuil à ladite roue de secours, et b) on enroule ledit ensemble de treuil, puis
- sur ladite chaîne de montage, c) on place cet ensemble de treuil supportant ladite roue de secours sous ledit plancher, et d) on fixe ledit ensemble de treuil sous ledit plancher depuis le dessus dudit plancher.

Suivant d'autres caractéristiques du procédé selon l'invention :
- on fixe ledit ensemble de treuil sous ledit plancher de manière provisoire entre les étapes c) et d),
- on introduit ledit panier à outils à l'intérieur de ladite cavité entre les étapes b) et c).

La présente invention fournit également un véhicule automobile remarquable en ce qu'il comprend un agencement conforme à ce qui précède.

D'autres caractéristiques et avantages de la présente invention apparaîtront à la lecture de la description qui va suivre et à l'examen du dessin annexé dans lequel :
- la figure 1 est une vue en perspective éclatée de l'agencement selon l'invention, et
- la figure 2 est une vue en perspective normale de l'agencement selon l'invention.

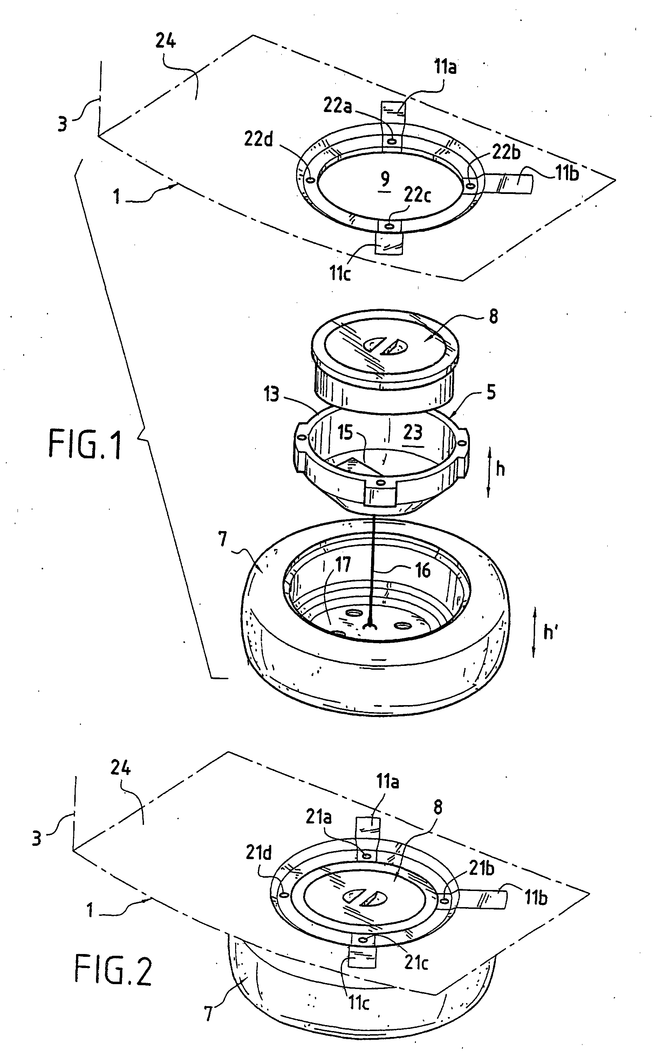

On se reporte à présent à la figure 1, sur laquelle on voit que l'agencement selon l'invention comprend un plancher 1 de véhicule automobile 3, un ensemble de treuil 5 et une roue de secours 7.

En option, l'agencement selon l'invention peut également comprendre un panier à outils 8.

Le plancher 1 peut être par exemple un plancher situé au fond du coffre arrière du véhicule 3.

Lorsque l'agencement selon l'invention comprend le panier à outils 8, le plancher 1 comprend une ouverture 9 dont la forme correspond sensiblement au contour du panier à outils 8.

Le panier à outils 8 peut contenir par exemple un cric, et différents outils permettant à un automobiliste d'effectuer des réparations mineures sur son véhicule.

De manière optionnelle, le panier à outils 8 peut comprendre un dispositif permettant d'en éclairer le contenu.

Des renforts 11a, 11b, 11c sont de préférence disposés sur le plancher 1.

Lorsque ce plancher comprend l'ouverture 9, ces renforts. sont de préférence disposés de manière radiale à la périphérie de cette ouverture, comme cela est visible sur les figures.

L'ensemble de treuil 5 peut comprendre par exemple un organe de support 13 à l'intérieur duquel est fixé un treuil 15 à proprement parler, ce treuil pouvant être manuel ou électrique.

Ce treuil 15 permet d'enrouler ou de dérouler un câble 16 pouvant être fixé sur la jante 17 de la roue de secours 7.

Selon une caractéristique essentielle de l'agencement selon l'invention visible sur la figure 2, l'organe de support 13 est fixé directement sous le plancher 1, avec des moyens de fixation tels que des vis 21a, 21b, 21c, 21d introduites dans des trous 22a, 22b, 22c, 22d prévus à cet effet dans le plancher 1 (voir figure 1).

Selon une caractéristique optionnelle, l'ensemble de treuil 5 est adapté pour pouvoir se loger à l'intérieur de la jante 17 de la roue de secours 7.

De manière préférée, comme cela est visible sur la figure 1, l'ensemble de treuil 5 définit un volume sensiblement cylindrique dont la hauteur h est voisine de celle h' de la roue de secours 7.

Lorsque l'agencement selon l'invention comprend le panier à outils 8, l'ensemble de treuil 5 définit une cavité 23 communiquant avec l'espace 24 situé au-dessus du plancher 1 par l'ouverture 9.

Cette cavité est conformée de manière à pouvoir recevoir le panier à outils 8 sans que ce dernier ne dépasse au-dessus du plancher 1.

De manière préférée, l'ouverture 9 est circulaire et le panier à outils 8 et la cavité 23 définissent des volumes sensiblement cylindriques qui se correspondent.

Le mode d'utilisation et les avantages de l'agencement selon l'invention sont les suivants.

En temps normal, la roue de secours 7 se trouve dans la position représentée sur la figure 2, c'est-à-dire qu'elle est maintenue sous le plancher 1 par le câble 16.

Lorsque l'ensemble de treuil 5 est adapté pour pouvoir se loger à l'intérieur de la jante 17 de la roue de secours 7, cette roue peut être maintenue sensiblement en contact contre le plancher 1, réalisant ainsi un encombrement minimal.

En cas de crevaison, on commence, le cas échéant, par sortir le panier à outils 8 de la cavité 23 via l'ouverture 9.

On notera que le fait que la cavité 23 est conformée pour pouvoir recevoir le panier à outils 8 permet de ranger ce panier de manière qu'il ne réduise pas le volume disponible dans le coffre du véhicule 3.

On notera également que la présence de renforts 11a, 11b, 11c permet de maintenir la rigidité du plancher 1, ce qui s'avère notamment nécessaire lorsque ce plancher comprend l'ouverture 9.

On actionne ensuite le treuil 15 de manière à dérouler le câble 16 et à poser la roue de secours 7 sur le sol.

On décroche ensuite le câble de la roue, et au moyen des outils situés à l'intérieur du panier 8, on effectue le changement de roue.

A noter que l'éclairage optionnel situé à l'intérieur du panier 8 permet de trouver facilement les outils, notamment lorsqu'il fait nuit.

Une fois que la roue de secours a été installée, on effectue les opérations décrites ci-dessus dans l'ordre inverse avec la roue crevée.

On notera que lors de la remise en place de la roue crevée, le fait que l'ensemble de treuil 5 est adapté pour se loger à l'intérieur de la jante 17 permet de centrer cette roue et ainsi de la positionner correctement par rapport au plancher 1.

Pour installer en usine l'agencement selon l'invention sur un véhicule automobile se déplaçant sur une chaîne de montage, on procède de la manière suivante.

Avant que le véhicule n'arrive au poste prévu pour l'installation de l'agencement selon l'invention, en dehors de la chaîne de montage, on relie le câble 16 du treuil 15 à la roue de secours 7.

On actionne ensuite le treuil 15 de manière à enrouler le câble 16 jusqu'à ce que la roue de secours 7 vienne s'emboîter sur l'ensemble de treuil 5.

Le cas échéant, on introduit alors le panier à outils 8 dans la cavité 23.

Ensuite, sur la chaîne de montage, on vient placer cet ensemble de treuil supportant la roue de secours 7 et éventuellement le panier à outils 8 sous le plancher 1, face à l'ouverture 9 le cas échéant.

De manière préférée, on utilise des moyens de fixation provisoires (non représentés) tels que des clips pour maintenir l'ensemble de treuil en place préalablement à sa fixation définitive.

On vient ensuite introduire les vis 21a, 21b, 21c, 21d depuis le dessus du plancher 1 dans les orifices 22a, 22b, 22c, 22d, de manière que ces vis viennent en prise. avec l'organe de support 13.

On serre ensuite ces vis jusqu'à ce que l'ensemble de treuil 5 soit correctement arrimé sous le plancher 1.

Comme on peut le comprendre à présent, le fait d'installer l'ensemble de treuil 5 directement sous le plancher 1 permet de le fixer depuis le dessus de ce plancher.

Ainsi, la position de la roue de secours 7 par rapport à cet ensemble de treuil est sans incidence sur l'installation de l'agencement selon l'invention.

On peut ainsi en particulier enrouler le câble 16 du treuil 15 de manière à plaquer la roue de secours 7 contre l'ensemble de treuil 5 préalablement à sa fixation sous le plancher 1 du véhicule 3, en dehors de la chaîne de montage, et réduire ainsi de manière significative le temps de cycle de cette chaîne.

Bien entendu, la présente invention n'est pas limitée au mode de réalisation décrit et représenté, fourni à titre d'exemple illustratif et non limitatif.

## Revendications

1. Agencement d'un ensemble de treuil (5) de roue de secours (7) sous un plancher (1) de véhicule automobile (3) dans lequel ledit ensemble de treuil (5) est fixé sous ledit plancher (1), **caractérisé en ce que** ledit ensemble de treuil (5) définit une cavité (23) communiquant avec l'espace (24) situé au-dessus dudit plancher (1) par une ouverture (9) formée dans ce plancher (1), de manière à former un espace de rangement accessible depuis ledit espace (24).

2. Agencement selon la revendication 1, **caractérisé en ce que** ledit ensemble de treuil (5) est adapté pour se loger sensiblement à l'intérieur de ladite roue de secours (7).

3. Agencement selon la revendication 2, **caractérisé en ce que** ledit ensemble de treuil (5) définit un volume sensiblement cylindrique dont la hauteur (h) est voisine de celle (h') de ladite roue de secours (7).

4. Agencement selon l'une quelconque des revendications précédentes, **caractérisé en ce que** ledit espace de rangement reçoit un panier à outils (8).

5. Agencement selon la revendication 4, **caractérisé en ce que** ledit panier à outils (8) définit un volume sensiblement cylindrique.

6. Agencement selon l'une des revendications 4 ou 5, **caractérisé en ce que** ledit panier à outils (8) comprend un dispositif d'éclairage.

7. Agencement selon l'une quelconque des revendications précédentes, **caractérisé en ce que** ledit plancher (1) comprend des renforts (11a, 11b, 11c).

8. Agencement selon la revendication 7, **caractérisé en ce que** lesdits renforts (11a, 11b, 11c) sont disposés radialement à la périphérie de ladite ouverture (9).

9. Procédé d'installation d'un agencement conforme à l'une quelconque des revendications précédentes sur un véhicule automobile (3) se déplaçant sur une chaîne de montage, **caractérisé en ce que** :
- en dehors de ladite chaîne de montage, a) on relie ledit ensemble de treuil (5) à ladite roue de secours (7), et b) on enroule ledit ensemble de treuil (5), puis
- sur ladite chaîne de montage, c) on place cet ensemble de treuil (5) supportant ladite roue de secours (7) sous ledit plancher (1), et d) on fixe ledit ensemble de treuil (5) sous ledit plancher (1) depuis le dessus dudit plancher (1).

10. Procédé selon la revendication 9, **caractérisé en ce qu'**on fixe ledit ensemble de treuil (5) sous ledit plancher (1) de manière provisoire entre les étapes c) et d).

11. Procédé selon l'une des revendication 9 ou 10 pour l'installation d'un agencement conforme à la revendication 4, **caractérisé en ce qu'**on introduit ledit panier à outils (8) à l'intérieur de ladite cavité (23.) entre les étapes b) et c).

12. Véhicule automobile (3), **caractérisé en ce qu'**il comprend un agencement conforme à l'une quelconque des revendications 1 à 8.

## Patentansprüche

1. Anordnung einer Windeneinheit (5) eines Reserverads (7) unter einem Boden (1) eines Kraftfahrzeugs (3), in welcher die Windeneinheit (5) unter dem Boden (1) befestigt ist, **dadurch gekennzeichnet, dass** die Windeneinheit (5) eine Vertiefung (23) definiert, welche mit dem Raum (24), der oberhalb des Bodens (1) angeordnet ist, über eine Öffnung (9) verbunden ist, die in diesem Boden (1) auf solch eine Art und Weise geformt ist, um einen Verstauungsraum zu bilden, der ausgehend von dem Raum (24) zugänglich ist.

2. Anordnung nach Anspruch 1, **dadurch gekennzeichnet, dass** die Windeneinheit (5) angepasst ist, um im Wesentlichen im Innern des Reserverads (7) untergebracht zu werden.

3. Anordnung nach Anspruch 2, **dadurch gekennzeichnet, dass** die Windeneinheit (5) ein im Wesentlichen zylindrisches Volumen definiert, dessen Höhe (h) in der Nähe von derjenigen h' des Reserverads ist.

4. Anordnung nach einem der vorangegangenen Ansprüche, **dadurch gekennzeichnet dass** der Verstauungsraum einen Einsatz für Werkzeuge (8) aufnimmt.

5. Anordnung nach Anspruch 4, **dadurch gekennzeichnet, dass** der Einsatz für Werkzeuge (8) ein im Wesentlichen zylindrisches Volumen definiert.

6. Anordnung nach einem der Ansprüche 4 oder 5, **dadurch gekennzeichnet, dass** der Einsatz für Werkzeuge (8) eine Beleuchtungsvorrichtung umfasst.

7. Anordnung nach einem der vorrangegangenen Ansprüche, **dadurch gekennzeichnet, dass** der Boden Verstärkungen (11a, 11b, 11c) umfasst.

8. Anordnung nach Anspruch 7, **dadurch gekennzeichnet, dass** die Verstärkungen (11a, 11b, 11c) radial an der Peripherie der Öffnung (9) angeordnet sind.

9. Verfahren eines Aufbaus einer Anordnung entsprechend einem der vorangegangenen Ansprüche an einem Kraftfahrzeug (3), das auf einer Montagelinie verschoben wird, **dadurch gekennzeichnet, dass**:
- man außerhalb der Montagelinie (a), die Windeneinheit (5) mit dem Reserverad (7) verbindet und man (b) die Windeneinheit (5) aufrollt, sodann
- man auf der Montagelinie (c) diese Windeneinheit (5) setzt, welche das Reserverad (7) unter dem Boden (1) trägt und man (b) die Windeneinheit (5) unter dem Boden (1) ausgehend von der Oberseite des Bodens (1) befestigt.

10. Verfahren nach Anspruch 9, **dadurch gekennzeichnet, dass** man die Windeneinheit (5) unter dem Boden (1) auf eine provisorische Art und Weise zwischen den Schritten (c) und (d) befestigt.

11. Verfahren nach einem der Ansprüche 9 oder 10 für den Aufbau einer Anordnung entsprechend Anspruch 4, **dadurch gekennzeichnet, dass** man den Werkzeugeinsatz (8) im Innern der Vertiefung (23) zwischen den Schritten (b) und (c) einführt.

12. Kraftfahrzeug (3), **dadurch gekennzeichnet, dass** es eine Anordnung entsprechend einem der Ansprüche 1 bis 8 aufweist.

## Claims

1. Arrangement of a winch unit (5) of a spare wheel (7) beneath a floor (1) of a motor vehicle (3) in which said winch unit (5) is fixed beneath said floor (1), **characterized in that** said winch unit (5) defines a cavity (23) communicating with the space (24) situated above said floor (1) through an opening (9) formed in the floor (1), so as to form a storage space accessible from said space (24).

2. Arrangement according to claim 1, **characterized in that** said winch unit (5) is designed to be housed approximately inside said spare wheel (7).

3. Arrangement according to claim 2, **characterized in that** said winch unit (5) defines an approximately cylindrical volume, the height (h) of which is close to that (h') of said spare wheel (7).

4. Arrangement according to any one of the previous claims **characterized in that** said storage space holds a tool box (8).

5. Arrangement according to claim 4, **characterized in that** said tool box (8) defines an approximately cylindrical volume.

6. Arrangement according to one of claims 4 or 5, **characterized in that** said tool box (8) comprises a lighting unit.

7. Arrangement according to any one of the previous claims, **characterized in that** said floor (1) comprises reinforcements (11a, 11b, 11c).

8. Arrangement according to claim 7 **characterized in that** said reinforcements (11a, 11b, 11c) are arranged radially to the circumference of said opening (9).

9. Process for installing an arrangement according to any one of the previous claims on a motor vehicle (3) moving on an assembly line, **characterized in that**:
- away from said assembly line, a) said winch unit (5) is connected to said spare wheel (7), and b) said winch unit (5) is wound up, then
- on said assembly line, c) the winch unit (5) supporting said spare wheel (7) is placed beneath said floor (1), and d) said winch unit (5) is fixed beneath said floor (1) from above said floor (1).

10. Process according to claim 9, **characterized in that** said winch unit (5) is temporarily fixed beneath said floor (1) between stages c) and d).

11. Process according to any one of claims 9 or 10 for installing an arrangement according to claim 4, **characterized in that** said tool box (8) is placed inside said cavity (23) between stages b) and c).

12. Motor vehicle (3), **characterized in that** it comprises an arrangement according to any one of claims 1 to 8.
